# EUROPÄISCHE PATENTSCHRIFT

(11) **EP 2 335 966 B1**
(45) Veröffentlichungstag und Bekanntmachung des Hinweises auf die Patenterteilung: **18.05.2016**
(21) Anmeldenummer: 10015359.2
(22) Anmeldetag: 07.12.2010
(51) Int. Cl.: B60M 1/04, B60M 1/30

(54) **ABSTANDSHALTER FÜR EIN STROMSCHIENENSYSTEM**
DISTANCER FOR AN ELECTRIC RAIL SYSTEM
PIÈCE INTERCALAIRE POUR UN SYSTÈME DE BARRES CONDUCTRICES

(30) Priorität: 19.12.2009 DE 202009017148 U
(43) Veröffentlichungstag der Anmeldung: 22.06.2011
(73) Patentinhaber: Rehau AG + Co, 95111 Rehau (DE)
(72) Erfinder: Künzel, Werner, 95111 Rehau (DE); Meinel, Udo, 95111 Rehau (DE)

(56) Entgegenhaltungen:
- DE-A1- 2 852 168
- DE-A1-102005 050 835

## Beschreibung

Die Erfindung betrifft ein Stromschienensystem umfassend wenigstens eine Stromschiene, wenigstens ein Abdeckelement sowie wenigstens einen Abstandshalter, wobei das Abdeckelement wenigstens ein Klemmelement aufweist und wobei der Abstandshalter wenigstens ein Rastelement, welches mit dem Klemmelement des Abdeckelementes, diese verbindend, in Wirkverbindung steht, dass der Abstandshalter durch zwei über eine Traverse verbundene Trägerelemente gebildet ist, dass das Rastelement des Abstandshalters als Federelement ausgebildet ist und mit einem freien Ende vom freien Ende des Trägerelementes des Abstandshalter über wenigstens einen Spalt beabstandet angeordnet ist und dass das Klemmelement des Abdeckelementes das als Federelement ausgebildete Rastelement rastend übergreift.

Derartige Stromschienensysteme sind im Stand der Technik beschrieben.
So beschreibt beispielsweise die DE 7018332 einen Abstandshalter für ein Stromschienensystem. Dieser Abstandshalter ist als winkelförmiger Hohlkörper ausgebildet, mittels angeformter Nasen durch eine Drehung auf der Stromschiene selbstschließende Riegel ausgestaltet, auf die eine die Verriegelung fixierende Abdeckhaube aus Kunststoff sowie eine seitliche Abdeckplatte aus Kunststoff aufgerastet sind. Dabei soll die Abdeckhaube mittels angeformter Klemmansätze auf den an den Riegeln angeformten Nasen aufgerastet sein.

Die Abstandshalter sind dabei als im bekannten Blasverfahren hergestellte Hohlkörper ausgebildet.

Diese Abstandshalter für ein Stromschienensystem haben sich bereits über viele Jahre bewährt und weisen gegenüber den bisher aus Holz oder anderen korrosionsanfälligen Werkstoffen hergestellten Abdecksystemen viele Vorteile auf.

Im Rahmen der Entwicklung sind jedoch die Anforderungen an die Festigkeit dieser Abstandshalter gestiegen, wobei gleichzeitig insbesondere die erforderlichen Montagezeiten sowie die Herstellungskosten reduziert werden müssen.
Parallel dazu war auch eine Funktionsoptimierung hinsichtlich eines Längenausgleiches erforderlich, sowie ein Toleranzausgleich.

Die Abstandshalter für moderne Stromschienensysteme müssen so hergestellt bzw. konstruiert sein, dass sie so multifunktional einsetzbar sind, dass die Montage zu allen Jahreszeiten einfach, schnell und ohne Verwechslungen realisierbar ist, dass die montierten Stromschienensysteme den langjährigen Belastungen standhalten und jederzeit schnell und reversibel reparierbar bzw. austauschbar sind.

Weiterhin beschreibt die DE 10 2005 050 835 A1 ein gattungsgemäßes Stromschienensystem mit einer Halterung zur Befestigung wenigstens eines Leitungsabschnitts eines der induktiven Energieübertragung dienenden Primärleiters am Fahrweg einer Magnetschwebebahn, wobei es zwei parallel und hintereinander angeordnete, in einem mittleren Bereich schwenkbar miteinander verbundenen Klemmplatten aufweist, die an einer Seite wenigsten je eine, eine Aufnahme für den Leitungsabschnitt bildende Klemmbacke enthalten, die durch relative Verschwenkung der beiden Klemmplatten in ein zur Fixierung des Leitungsabschnitts durch Klemmung bestimmte Schließstellung und eine das Einlegen des Leitungsabschnitts in die Aufnahme ermöglichte Offenstellung bringbar sind und das die Klemmplatten zur ihrer Verriegelung in der Schließstellung bestimmte Verriegelungsmittel sowie an einer von dem Klemmbacken abgewandte Seite zu ihrer Befestigung am Fahrweg bestimmte Befestigungsmittel aufweisen. Die Befestigungsmittel an den Klemmplatten sind Rastelemente die unter Bildung einer Schnappverbindung mit Halteleisten verrasten. Die Montage der Klemmplatten am Fahrweg erfolgt mithilfe einer Montageplatte und eines von dieser seitlich nach außen stehenden Führungselements, an dem die Haltenasen angeordnet sind.

Hier setzt die Erfindung ein, die sich die Aufgabe gestellt hat, die Nachteile des bisher bekannten Standes der Technik zu überwinden und ein Stromschienensystem aufzuzeigen, das kostengünstig und wirtschaftlich herstellbar ist, das schnell und nicht verwechselbar montierbar ist und das einen sicheren und störungsfreien Dauerbetrieb ermöglicht.

Erfindungsgemäß wird diese Aufgabe durch die Merkmale des Anspruches 1 gelöst. Weitere Ausgestaltungen der Erfindung sind in den Unteransprüchen beschrieben.

Es hat sich überraschend herausgestellt, dass ein Stromschienensystem umfassend wenigstens eine Stromschiene, wenigstens ein Abdeckelement sowie wenigstens einen Abstandshalter, wobei das Abdeckelement wenigstens ein Klemmelement aufweist und wobei der Abstandshalter wenigstens ein Rastelement aufweist, welches mit dem Klemmelement des Abdeckelementes, diese verbindend, in Wirkverbindung steht, wobei der Abstandshalter durch zwei über eine Traverse verbundene Trägerelemente gebildet ist, wobei das Rastelement des Abstandshalters als Federelement ausgebildet ist und mit einem freien Ende vom freien Ende des Trägerelementes des Abstandshalter über wenigstens einen Spalt beabstandet angeordnet ist und wobei das Klemmelement des Abdeckelementes das als Federelement ausgebildete Rastelement rastend übergreift, sich dadurch auszeichnet, dass das Rastelement, welches gegenüber seinem freien Ende ein Abstützelement aufweist, dass das Abstützelement dabei stoffschlüssig mit dem Traversenelement und dem Trägerelement verbunden ist, dass der Spalt eine Breite aufweist, die wenigstens der Wanddicke des als Federelement ausgebildeten Rastelementes entspricht. In dieser Ausgestaltung wird eine einfache, aber sichere Fixierung des Abdeckelementes auf dem Abstandshalter ermöglicht. Durch diese Ausgestaltung ist es möglich, ein Stromschienensystem zur Verfügung zu stellen, der einerseits leicht und unverwechselbar auf die Stromschiene montierbar ist und an den die jeweiligen Abdeckelemente schnell und unverschiebbar montierbar sind. Ein weiterer Vorteil wird darin gesehen, dass die montierten Abdeckelemente, die teilweise über mehrere Kilometer aneinander angeordnet an den Abstandshaltern fixiert sind, sich bei temperaturbedingten Längenveränderungen über die Abstandshalter selbst schieben und sich nicht verformen bzw. deformieren.

Das erfindungsgemäße Stromschienensystem zeichnet sich weiter dadurch aus, dass der Spalt zwischen dem Abstandshalter und dem Federelement eine Breite aufweist, die wenigstens der Wanddicke des als Federelement ausgebildeten Rastelementes entspricht. Hierdurch ist es möglich, dass insbesondere bei der Montage der Abdeckelemente beispielsweise im Winter verhindert wird, dass bei zu hoher Kraftaufwendung über das Abdeckelement das Federelement bricht und somit eine Montage nicht möglich ist.

Das Stromschienensystem zeichnet sich weiter dadurch aus, dass es durch zwei über eine Traverse verbundene Trägerelemente gebildet ist. Hierdurch ist es vorteilhafterweise möglich, den Abstandshalter den entsprechenden Geometrien der jeweiligen Stromschienen und /oder der Abdeckelemente so anzupassen, dass er leicht, aber sicher auf diesen fixierbar ist.

Dabei hat es sich weiter als vorteilhaft herausgestellt, dass die Trägerelemente einander in einem spitzen Winkel gegenüberliegend angeordnet sind. Hierdurch ist einerseits eine einfache und kostengünstige Herstellung möglich, andererseits eine nicht verwechselbare Montage auf der Stromschiene.
In einer weiteren Ausgestaltungsform des erfindungsgemäßen Stromschienensystems ist der Spalt durch ein freies Ende des Rastelementes und ein freies Ende des Trägerelementes gebildet. Hierdurch lässt sich der Abstandshalter für ein Stromschienensystem sehr individuell gestalten und ist multifunktional für verschiedene Stromschienensysteme einsetzbar sowie zur Funktionsoptimierung bzw. zum Toleranzausgleich.

In einer weiteren vorteilhaften Ausgestaltung des erfindungsgemäßen Stromschienensystems ist das Rastelement über ein Abstützelement mit dem Trägerelement des Abstandshalters verbunden. In dieser Ausgestaltung wird eine einfache, aber sichere Fixierung des Abdeckelementes auf dem Abstandshalter ermöglicht.

In einer weiteren vorteilhaften Ausführungsform ist das Stromschienensystem so ausgebildet, dass das Klemmelement des Abdeckelementes das als Federelement ausgebildete Rastelement rastend übergreift. Durch diese Ausbildung lassen sich die Herstellungskosten des Abstandshalters bei ausreichender Fixierung und Festigkeit entsprechend reduzieren.

Das Stromschienensystem ist weiterhin so ausgebildet, dass wenigstens ein Trägerelement und / oder ein Traversenelement wenigstens eine Öffnung aufweist. Dies führt vorteilhafterweise dazu, dass in dem Stromschienensystem, welches durch die Abdeckelemente begrenzt ist, in Längsrichtung ein Luft- bzw. Feuchtigkeitsaustausch erfolgen kann.
Dabei hat sich weiterhin als sehr vorteilhaft herausgestellt, dass das Traversenelement etwa Doppel-T-förmig ausgebildet ist, so dass die Anforderungen an die Festigkeit in Verbindung mit einer einfachen Montage des Abstandshalters für ein erfindungsgemäßes Stromschienensystem problemlos erfüllbar sind.

Weiterhin vorteilhaft wird gesehen, dass bei dem erfindungsgemäßen Stromschienensystem ein freies Ende des Trägerelementes orthogonal durch ein Halteelement abgestützt ist. Dies erhöht partiell die Festigkeiten des Abstandshalters.

Das Stromschienensystem zeichnet sich ebenfalls dadurch aus, dass am Trägerelement des Abstandshalters wenigstens ein Befestigungselement ausgebildet ist. Dieses ermöglicht es in vorteilhafter und einfacher Weise, dass die am Abstandshalter angeordneten Abdeckelemente durch zusätzliche beispielsweise Verschraubungen kraftschlüssig bzw. Verklebung stoffschlüssig angeordnet sind.

Die Erfindung soll nun an Ausführungsbeispielen, die diese nicht einschränken, näher beschrieben werden.

Es zeigen:
- Fig. 1: perspektivische Darstellung eines Stromschienensystems umfassend eine Stromschiene, zwei Abdeckelemente sowie einen Abstandshalter
- Fig. 2: perspektivische Darstellung eines Abstandshalters für ein erfindungsgemäßes Stromschienensystem
- Fig. 3: weitere perspektivische Darstellung eines Abstandshalters für ein erfindungsgemäßes Stromschienensystem

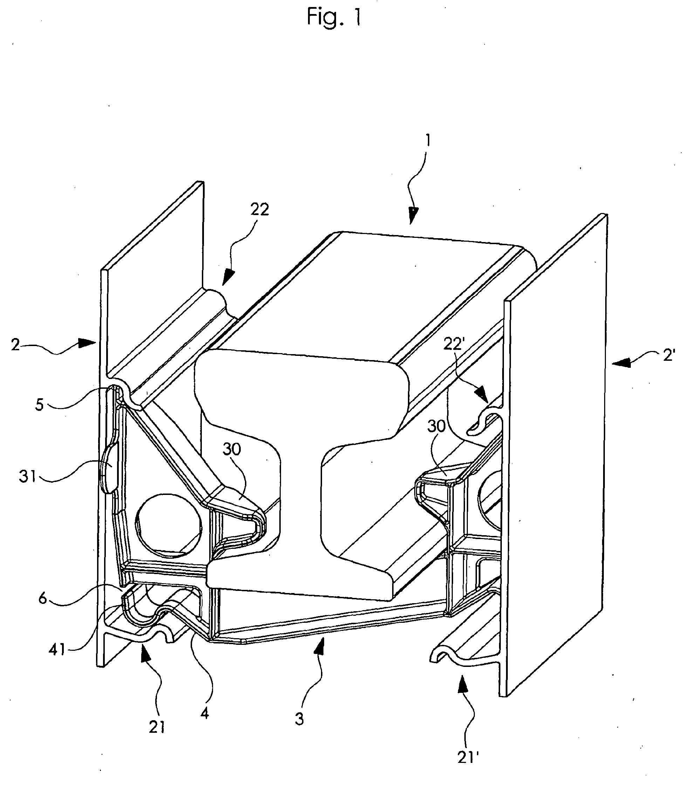

In Fig. 1 ist eine perspektivische Darstellung eines Stromschienensystems dargestellt, umfassend eine Stromschiene 1, die Abdeckelemente 2,2' sowie einen Abstandshalter 3.
Der Abstandshalter 3 weist im Querschnitt gesehen eine etwa Doppel-T-förmige Kontur auf.
In diesem Ausführungsbeispiel handelt es sich um eine sogenannte von oben bestrichene Stromschiene 1, die an den anderen Seiten abgedeckt werden muss.
Hierzu wurde der Abstandshalter 3 an der Stromschiene 1 derart fixiert, dass das Traversenelement 9 an einer freien Fläche der Stromschiene 1 positioniert und über das dritte Klemmelement 30 mit dieser Stromschiene 1 kraftschlüssig verbunden ist.
Der Abstandshalter 3 weist an seinen Trägerelementen 7,8 die Rastelemente 4,5 auf, die einander gegenüberliegend angeordnet sind. An dem Rastelement 4,5 wurde das Abdeckelement 2,2' über die Klemmelemente 21,21' und über das zweite Klemmelement 22, 22' kraftschlüssig verbunden.
Das Rastelement 4 des Abstandshalters 3 ist in diesem Ausführungsbeispiel als Federelement ausgebildet und mit seinem freien Ende 41 vom Abstandshalter 3 über den Spalt 6 beabstandet angeordnet. In diesem Ausführungsbeispiel weist der Spalt 6 eine Breite auf, die etwa der doppelten Wanddicke des als Federelement ausgebildeten Rastelementes 4 entspricht. Am Trägerelement 7 des Abstandshalters 3 ist ein Befestigungselement 31 angeordnet, welches direkt an der dem Abstandshalter 3 zugewandten Innenwand des Abdeckelementes 2 positioniert ist. Das Befestigungselement 31 dient dazu, dass durch das Abdeckelement 2 über geeignete Befestigungselemente wie beispielsweise Schrauben das Abdeckelement 2 kraftschlüssig mit dem Abstandshalter 3 verbindbar ist.

Dabei können in vorteilhafter Weise die Abdeckelemente 2,2' mit ihrem zweiten Klemmelement 22, 22' am Rastelement 5 des Abstandshalters 3 eingehangen und über das erste Klemmelement 21,21' am Rastelement 4 des Abstandshalters 3 fixiert werden.
Durch den zwischen dem freien Ende 41 des als Federelement ausgebildeten Rastelementes 4 befindlichen Spalt 6 lässt sich die Montage des Abdeckelementes 2,2' problemlos realisieren, wobei einer möglichen Beschädigung des als Federelement ausgebildeten Rastelementes 4 bei der Montage ausscheidet, da das freie Ende dann direkt auf dem Abstandshalter 3 aufliegt.
Nach erfolgter Montage des Abdeckelementes 2,2' kann sich das als Federelement ausgebildete Rastelement 4 elastisch zurückverformen und die Abdeckung 2,2' kraftschlüssig fixieren. Ein weiterer Vorteil des als Federelementes ausgebildeten Rastelementes 4 besteht darin, dass sich die Abdeckelemente 2, 2', welche beispielsweise über mehrere Kilometer an einer Bahnstrecke verbaut sind, insbesondere bei Temperatur- bzw. Längenänderungen über den Abstandshalter 3 hinwegschieben können. Ein weiterer Vorteil wird darin gesehen, dass die Abdeckelemente 2, 2' gerade bei einer temperaturbedingten Längenänderung sich nicht zwischen benachbart angeordneten Abstandshaltern 3 nach der Stromschiene 1 hin bzw. von der Stromschiene 1 wegbewegen und so eine schlangenartige bzw. S-förmige Kontur ergeben.
Die Breite des Spaltes 6 zwischen dem freien Ende 41 des als Federelement ausgebildeten Rastelementes 4 und dem Abstandshalter 3 wird entsprechend der Montagekräfte bzw. der bei der Temperatur- bzw. Längenänderung auftretenden Kräfte dimensioniert.

Somit ist es erfindungsgemäß möglich, Stromschienen 1 mit mehreren in Abstand zueinander beabstandeten Abstandshaltern 3 zu versehen, die wiederum Abdeckelemente 2,2' kraftschlüssig aufnehmen und so neben den sicherheitstechnischen Anforderungen der Abdeckung einer elektrischen Strom führenden Stromschiene 1 auch noch ein ansprechendes Äußeres erzielen, wobei die Herstellungskosten für ein derartiges System optimiert sind.

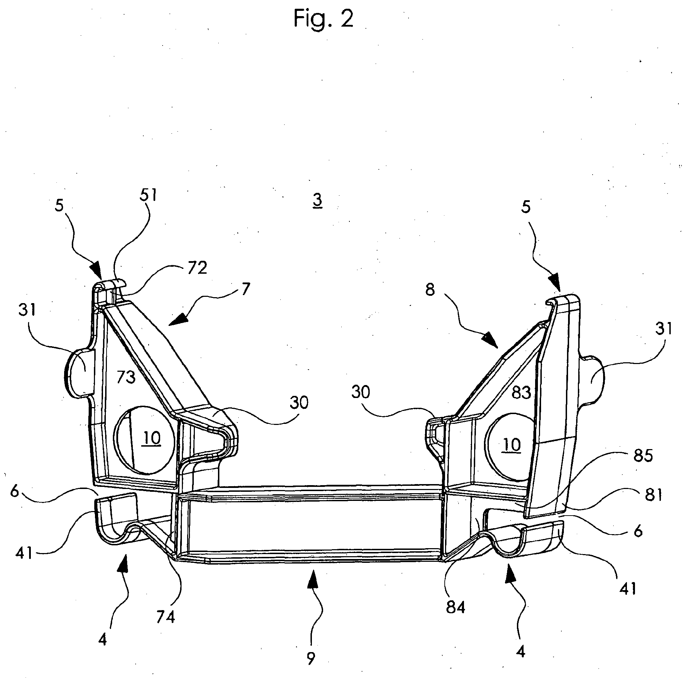

In Fig. 2 ist eine perspektivische Darstellung eines Abstandshaltes 3 für ein erfindungsgemäßes Stromschienensystem dargestellt. Der Abstandshalter 3 ist durch zwei über ein Traversenelement 9 verbundene Trägerelemente 7,8 gebildet, die in diesem Ausführungsbeispiel in einem spitzen Winkel gegenüberliegend angeordnet sind. Das Traversenelement 9 und Teile der Trägerelemente 7,8 sind dabei Doppel-T-förmig ausgebildet.
Das Trägerelement 7 des Abstandshalters 3 weist ein als Federelement ausgebildetes Rastelement 4 auf, wobei das freie Ende 41 des Rastelementes 4 über den Spalt 6 vom Abstandshalter 3 beabstandet angeordnet ist. Zur weiteren Optimierung der Eigenschaften des als Federelement ausgebildeten Rastelementes 4 weist dieses gegenüber seinem freien Ende 41 ein Abstützelement 74 auf. Das Abstützelement 74 ist dabei stoffschlüssig mit dem Traversenelement 9 und dem Trägerelement 7 verbunden.

Am Trägerelement 7 des Abstandshalters 3 ist das dritte Klemmelement 30 angeordnet, welches dazu dient, den Abstandshalter 3 an der nicht dargestellten Stromschiene 1 kraftschlüssig zu fixieren. Das Trägerelement 7, 8 des Abstandshalters 3 weist weiterhin eine Öffnung 10 auf, die dazu dient, die bei montierten Abstandshalter 3 und kraftschlüssig angeordneten Abdeckelementen 2,2' einen längs der Stromschiene 1 erfolgenden Luftaustausch zu ermöglichen. Dazu ist die Wand 73, 83 des Trägerelementes 7,8 mit der Öffnung 10 durchbrochen.

Das Trägerelement 7 des Abstandshalters 3 weist an seiner, dem als Federelement ausgebildeten Rastelement 4 gegenüberliegenden, Seite das Rastelement 5 auf. Das freie Ende 71 des Rastelementes 5 ist vom Abstandshalter 3 beabstandet angeordnet und durch das Abstützelement 72 verstärkt.

Das Trägerelement 8 des Abstandshalters 3 ist stoffschlüssig über das Traversenelement 9 mit dem Trägerelement 7 verbunden. Am Trägerelement 8 ist ein als Federelement ausgebildetes Rastelement 4 angeordnet, dessen freies Ende 41 über den Spalt 6 vom freien Ende 81 des Trägerelementes 8 beabstandet angeordnet ist. Das als Federelement ausgebildete Rastelement 4 ist durch das Abstützelement 84 verstärkt.
Das freie Ende 81 des Trägerelementes 8 ist orthogonal durch das Halteelement 85 abstützend verstärkt. An dem als Federelement ausgebildeten Rastelement 4 gegenüberliegenden freien Ende des Trägerelementes 8 ist das Rastelement 5 ausgebildet, welches in der gleichen Ausführungsform wie das Rastelement 5 am Trägerelement 7 ausgebildet ist. Auch das dem Traversenelement 9 gegenüberliegende zweite Klemmelement 30 des Trägerelementes 3 ist analog dem zweiten Klemmelement 30 des Trägerelementes 7 ausgebildet. Das Trägerelement 7 ist gegenüber dem Trägerelement 8 in einem spitzen Winkel von etwa 40° angeordnet und stoffschlüssig über das Traversenelement 9 verbunden. Durch die unterschiedliche Auslegung der Wandstärken der als Federelement ausgebildeten Rastelemente 4 sowie der damit verbundenen Abstützelemente 72, 74 ist eine optimale Auslegung des Abstandshalters 3 mit den Abdeckelementen 2, 2' für alle Geometrien sowie gesetzlichen Anforderungen von Stromschienensystemen montagefreundlich möglich.

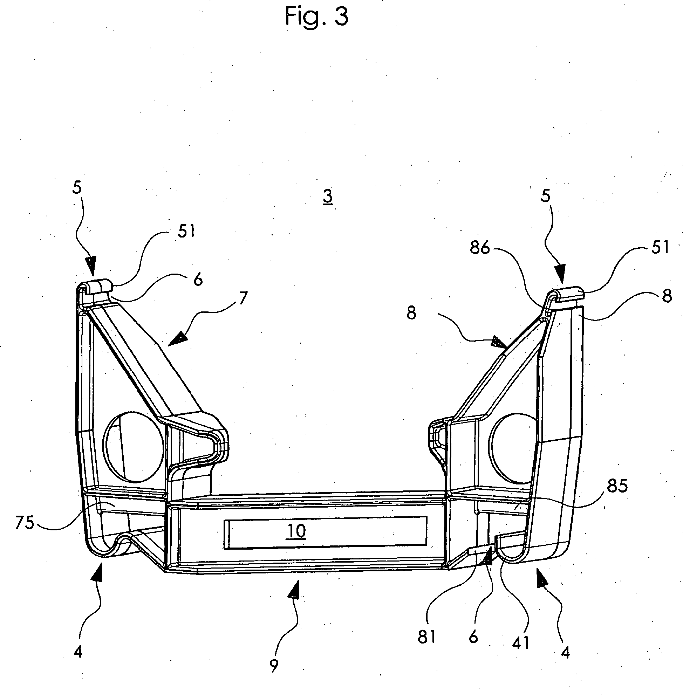

In Fig. 3 ist eine weitere perspektivische Darstellung eines Abstandshalters 3 für ein erfindungsgemäßes Stromschienensystem dargestellt.

Der Abstandshalter 3 ist durch zwei über ein Traversenelement 9 verbundene Trägerelemente 7, 8 gebildet. Das dem Trägerelement 8 gegenüberliegende Trägerelement 7 weist an einem freien Ende das Rastelement 4 auf, welches im Querschnitt gesehen S-förmig ausgebildet ist und das Traversenelement 9 mit dem Trägerelement 7 stoffschlüssig verbindet. Das Abstützelement 75 welches am Trägerelement 7 angeordnet ist verstärkt dabei die Wirkung des Rastelementes 4.

An der dem Rastelement 4 gegenüberliegenden Seite des Trägerelementes 7 ist das Rastelement 5 angeordnet, welches in diesem Ausführungsbeispiels als Federelement ausgebildet ist. Das freie Ende 51 des Rastelementes 5 ist über den Spalt 6 vom Trägerelement 7 des Abstandshalter 3 beabstandet angeordnet.

Das über das Traversenelement 9 stoffschlüssig mit dem Trägerelement 7 verbundene Trägerelement 8 weist ein Rastelement 4 und ein Rastelement 5 auf.

Das Rastelement 4 des Trägerelementes 8 ist als Federelement ausgebildet und stoffschlüssig mit dem Trägerelement 8 verbunden. Das freie Ende 41 des Rastelementes 4 ist über den Spalt 6 vom freien Ende 81 des Trägerelementes 8 beabstandet angeordnet. Das als Federelement ausgebildete Rastelement 4 ist weiterhin über das Abstützelement 85 mit dem Trägerelement 8 verbunden. Das freie Ende 81 des Trägerelementes 8 ist orthogonal durch das Halteelement 82 mit dem Trägerelement 8 verbunden.
Gegenüber dem als Federelement ausgebildeten Rastelement 4 weist das Trägerelement 8 des Abstandshalters 3 das Rastelement 5 auf. Das freie Ende 51 des Rastelementes 5 ist über den Spalt 6 vom freien Ende 82 des Trägerelementes 8 beabstandet angeordnet. Das freie Ende 51 des Rastelementes 5 des Trägerelementes 8 ist orthogonal durch das Halteelement 86 abstützend mit dem Trägerelement 8 verbunden.
Durch die unterschiedliche Anordnung der Rastelemente 4, 5 an den Trägerelementen 7, 8 des Abstandshalters 3 ist es kostengünstig möglich, mit einem Abstandshalter 3 Stromschienen 1 fixierend zu umgreifen und je nach Geometrie der nicht dargestellten Stromschiene 1 unterschiedliche Abdeckungselemente 2,2' einzusetzen.
Durch den Abstandshalter 3 für ein erfindungsgemäßes Stromschienensysteme ist es somit möglich, kostengünstig hergestellte Abdecksysteme für Stromschienen auch schnell, effizient und den gesetzlichen Regelungen und Anforderungen entsprechend zu montieren.
Es liegt jedoch auch im Rahmen der Erfindung, dass bereits bestehende Abdecksysteme für Stromschienen durch das erfindungsgemäße Stromschienensystem mit dem dazugehörigen Abstandshalter 3 sowie den Abdeckelementen 2,2' nachrüstbar sind.

In diesem Ausführungsbeispiel sind sowohl der Abstandshalter 3 als auch die Abdeckelemente 2,2' aus einem polymeren Werkstoff hergestellt, was einerseits die Herstellungskosten stark reduziert, andererseits die Gestaltungsvielfalt durch die verwendbaren Geometrien bzw. Farben erhöht und zusätzlich noch die Strom führenden Stromschienen 1 isolierend und korrosionsfrei abdeckt bzw. vor unbefugten Eingriffen Dritter schützt.
Es liegt weiterhin im Rahmen der Erfindung, dass das Stromschienensystem ein weiteres Abdeckelement aufweist, das von dem bestrichenen Ende der Stromschiene beabstandet angeordnet ist.

## Patentansprüche

1. Stromschienensystem umfassend wenigstens eine Stromschiene (1), wenigstens ein Abdeckelement (2, 2') sowie wenigstens einen Abstandshalter (3), wobei das Abdeckelement (2, 2') wenigstens ein Klemmelement (21, 21', 22, 22') aufweist und wobei der Abstandshalter (3) wenigstens ein Rastelement (4) aufweist, welches mit dem Klemmelement (21, 21', 22, 22') des Abdeckelementes (2, 2'), diese verbindend, in Wirkverbindung steht, wobei der Abstandshalter (3) durch zwei über eine Traverse (9) verbundene Trägerelemente (7, 8) gebildet ist, wobei das Rastelement (4) des Abstandshalters (3) als Federelement ausgebildet ist und mit einem freien Ende (41) vom freien Ende des Trägerelementes (7, 8) des Abstandshalters (3) über wenigstens einen Spalt (6) beabstandet angeordnet ist, wobei das Klemmelement (21, 21', 22, 22') des Abdeckelementes (2, 2') das als Federelement ausgebildete Rastelement (4) rastend übergreift, **dadurch gekennzeichnet, dass** das Rastelement (4) gegenüber seinem freien Ende (41) ein Abstützelement (74, 84) aufweist, dass das Abstützelement (74, 84) dabei stoffschlüssig mit dem Traversenelement (9) und dem Trägerelement (7, 8) verbunden ist, und dass der Spalt (6) eine Breite aufweist, die wenigstens der Wanddicke des als Federelement ausgebildeten Rastelementes (4) entspricht.

2. Stromschienensystem nach Anspruch 1, **dadurch gekennzeichnet, dass** die Trägerelemente (7, 8) einander in einem spitzen Winkel gegenüberliegend angeordnet sind.

3. Stromschienensystem nach einem der vorhergehenden Ansprüche, **dadurch gekennzeichnet, dass** das Trägerelement (7, 8) an seiner der Stromschiene (1) gegenüberliegenden Seite wenigstens ein drittes Klemmelement (30) aufweist.

4. Stromschienensystem nach einem der vorhergehenden Ansprüche, **dadurch gekennzeichnet, dass** wenigstens ein Trägerelement (7, 8) und / oder ein Traversenelement (9) wenigstens eine Öffnung (10) aufweist.

5. Stromschienensystem nach einem der vorhergehenden Ansprüche, **dadurch gekennzeichnet, dass** das Traversenelement (9) etwa Doppel-T-förmig ausgebildet ist.

6. Stromschienensystem nach einem der vorhergehenden Ansprüche, **dadurch gekennzeichnet, dass** ein freies Ende (71, 81, 82) des Trägerelementes (7, 8) orthogonal durch ein Halteelement (72, 85, 86) abgestützt ist.

7. Stromschienensystem nach einem der vorhergehenden Ansprüche, **dadurch gekennzeichnet, dass** am Trägerelement (7, 8) des Abstandshalters (3) wenigstens ein Befestigungselement (31) ausgebildet ist.

## Claims

1. Power rail system comprising at least one power rail (1), at least one covering element (2, 2') and at least one spacer (3), wherein the covering element (2, 2') has at least one clamping element (21, 21', 22, 22') and wherein the spacer (3) has at least one latching element (4) which is in operative connection with the clamping element (21, 21', 22, 22') of the covering element (2, 2'), connecting them, wherein the spacer (3) is formed by two carrier elements (7, 8) connected via a crossmember (9), wherein the latching element (4) of the spacer (3) is designed as a spring element and is arranged spaced apart by a free end (41) from the free end of the carrier element (7, 8) of the spacer (3) via at least one gap (6), wherein the clamping element (21, 21', 22, 22') of the covering element (2, 2') engages in a latching manner over the latching element (4) designed as a spring element, **characterized in that** the latching element (4) has a supporting element (74, 84) opposite its free end (41), **in that** the supporting element (74, 84) is in this case integrally bonded to the crossmember element (9) and to the carrier element (7, 8), and **in that** the gap (6) has a width which corresponds at least to the wall thickness of the latching element (4) designed as a spring element.

2. Power rail system according to Claim 1, **characterized in that** the carrier elements (7, 8) are arranged opposite one another at an acute angle.

3. Power rail system according to one of the preceding claims, **characterized in that** the carrier element (7, 8) has at least one third clamping element (30) at its side opposite the power rail (1).

4. Power rail system according to one of the preceding claims, **characterized in that** at least one carrier element (7, 8) and/or a crossmember element (9) has at least one opening (10).

5. Power rail system according to one of the preceding claims, **characterized in that** the crossmember element (9) is designed to be approximately double-T-shaped.

6. Power rail system according to one of the preceding claims, **characterized in that** a free end (71, 81, 82) of the carrier element (7, 8) is supported orthogonally by a holding element (72, 85, 86).

7. Power rail system according to one of the preceding claims, **characterized in that** at least one fastening element (31) is formed on the carrier element (7, 8) of the spacer (3).

## Revendications

1. Système de barre omnibus comprenant au moins une barre omnibus (1), au moins un élément de recouvrement (2, 2') ainsi qu'au moins un intercalaire (3), l'élément de recouvrement (2, 2') présentant au moins un élément de serrage (21, 21', 22, 22') et l'intercalaire (3) présentant au moins un élément d'encliquetage (4) qui est en liaison fonctionnelle avec l'élément de serrage (21, 21', 22, 22') de l'élément de recouvrement (2, 2') en se connectant à celui-ci, l'intercalaire (3) étant formé par deux éléments de support (7, 8) connectés par le biais d'une traverse (9), l'élément d'encliquetage (4) de l'intercalaire (3) étant réalisé sous forme d'élément de ressort et étant disposé avec une extrémité libre (41) à distance de l'extrémité libre de l'élément de support (7, 8) de l'intercalaire (3) par le biais d'au moins une fente (6), l'élément de serrage (21, 21', 22, 22') de l'élément de recouvrement (2, 2') venant en prise par le dessus en s'encliquetant avec l'élément d'encliquetage (4) réalisé en tant qu'élément de ressort, **caractérisé en ce que** l'élément d'encliquetage (4) présente, à l'opposé de son extrémité libre (41), un élément d'appui (74, 84), **en ce que** l'élément d'appui (74, 84) est en l'occurrence connecté par engagement par liaison de matière à l'élément de traverse (9) et à l'élément de support (7, 8), et **en ce que** la fente (6) présente une largeur qui correspond au moins à l'épaisseur de paroi de l'élément d'encliquetage (4) réalisé sous forme d'élément de ressort.

2. Système de barre omnibus selon la revendication 1, **caractérisé en ce que** les éléments de support (7, 8) sont disposés en regard l'un de l'autre suivant un angle aigu.

3. Système de barre omnibus selon l'une quelconque des revendications précédentes, **caractérisé en ce que** l'élément de support (7, 8) présente, au niveau de son côté opposé à la barre omnibus (1), au moins un troisième élément de serrage (30).

4. Système de barre omnibus selon l'une quelconque des revendications précédentes, **caractérisé en ce qu'**au moins un élément de support (7, 8) et/ou un élément de traverse (9) présentent au moins une ouverture (10).

5. Système de barre omnibus selon l'une quelconque des revendications précédentes, **caractérisé en ce que** l'élément de traverse (9) est réalisé approximativement en forme de double T.

6. Système de barre omnibus selon l'une quelconque des revendications précédentes, **caractérisé en ce qu'**une extrémité libre (71, 81, 82) de l'élément de support (7, 8) est supportée perpendiculairement par un élément de retenue (72, 85, 86).

7. Système de barre omnibus selon l'une quelconque des revendications précédentes, **caractérisé en ce qu'**au moins un élément de fixation (31) est réalisé au niveau de l'élément de support (7, 8) de l'intercalaire (3).
